## Europäisches Patentamt

## European Patent Office

## Office européen des brevets

(19)

(11) Numéro de publication: **0 061 401**
**B1**

(12)    **FASCICULE DE BREVET EUROPEEN**

(45) Date de publication du fascicule du brevet:
06.02.85

(51) Int. Cl.⁴: **B 23 K 9/02,** B 23 Q 35/13

(21) Numéro de dépôt: **82400503.7**

(22) Date de dépôt: **19.03.82**

(54) Procédé de positionnement latéral d'un organe par rapport à une discontinuité formée entre deux surfaces métalliques décalées et dispositif de mise en oeuvre de ce procédé.

(30) Priorité: **24.03.81 FR 8105838**

(43) Date de publication de la demande:
**29.09.82 Bulletin 82/39**

(45) Mention de la délivrance du brevet:
**06.02.85 Bulletin 85/6**

(84) Etats contractants désignés:
**BE DE GB IT SE**

(56) Documents cités:
**EP - A - 0 036 358**
**FR - A - 2 267 854**
**GB - A - 1 584 707**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Cornu, Jean, 34, route de Vertou, F-44200 Nantes (FR)**
Inventeur: **Detriche, Jean-Marie, 6 C. Bois de la Ferme, F-78240 Chambourcy (FR)**
Inventeur: **Marchal, Paul, 1-13, Résidence du Parc du Château, F-91190 Gif-sur-Yvette (FR)**
Inventeur: **Vertut, Jean, 3, rue Voisembert, F-92130 Issy-Les-Moulineaux (FR)**

(74) Mandataire: **Mongrédien, André et al, c/o BREVATOME 25, rue de Ponthieu, F-75008 Paris (FR)**

ACTORUM AG

**Description**

La présente invention concerne un procédé de positionnement latéral d'un organe par rapport à une discontinuité formée entre deux surfaces métalliques susceptibles d'être décalées en hauteur l'une par rapport à l'autre, ainsi qu'un dispositif pour la mise en oeuvre de ce procédé.

De façon plus précise, l'invention se rapporte au problème du positionnement latéral automatique d'un organe tel qu'une torche de soudage par rapport à la discontinuité que constitue le joint séparant deux pièces à souder, lorsque les surfaces à souder sont décalées en hauteur l'une par rapport à l'autre. Cependant, cette application n'est pas limitative et l'invention peut être utilisée pour résoudre tout problème de positionnement d'un organe par rapport à une discontinuité formée entre deux surfaces présentant entre elles un certain décalage. L'invention se rapporte aussi au contrôle de ce positionnement.

On connaît du document FR-A-2 267 854 un dispositif pour le guide d'outils par rapport à une discontinuité formée entre deux surfaces métalliques susceptibles d'être décalées en hauteur l'une par rapport à l'autre. Ce dispositif comprend un générateur de champ magnétique ainsi que deux têtes d'exploration disposées symétriquement par rapport au plan d'usinage.

Afin de réaliser le positionnement automatique d'un organe sur une discontinuité et le suivi de cette discontinuité par l'organe positionné, on peut utiliser un détecteur tel qu'une sonde à courants de Foucault comportant deux bobines incorporées dans un pont de mesure. Les signaux électriques délivrés par la sonde sont traités par différence de phase dans un circuit approprié pour commander un asservissement assurant le positionnement automatique de l'organe sur la discontinuité. L'organe à positionner et le détecteur peuvent être liés mécaniquement de façon rigide et dans ce cas la distance qui les sépare est choisie en fonction du rayon de courbure minimum de la discontinuité afin que celle-ci puisse être considérée comme une ligne droite entre le détecteur et l'organe à positionner.

Des dispositifs analogues peuvent être utilisés pour assurer simultanément ou séparément le positionnement en hauteur et l'orientation angulaire de l'organe par rapport aux surfaces des pièces en vis-à-vis. Cette remarque fait apparaître que les signaux délivrés par le détecteur peuvent être représentatifs à la fois du positionnement latéral de celui-ci par rapport à une discontinuité, du positionnement en hauteur du détecteur et de son orientation angulaire. En d'autres termes, si le traitement des signaux délivrés par le détecteur a seulement pour but d'assurer un positionnement latéral par rapport à une discontinuité, il est clair que le positionnement réalisé sara erroné si l'inclinaison du détecteur varie au cours de la mesure.

D'autre part, lorsqu'on utilise un détecteur à courants de Foucault comportant deux bobines disposées en face de chacune des pièces à souder pour effectuer une mesure différentielle de phase, un décalage en hauteur des bords des tôles à souder est pratiquement équivalent pour le détecteur à son inclinaison par rapport à la normale aux surfaces des pièces. Un tel décalage, surtout lorsqu'il est variable, conduit donc à assurer un positionnement erroné de la torche de soudage ou de l'organe qui lui correspond.

La présente invention a précisément pour objet un procédé de positionnement latéral d'un organe tel qu'une torche de soudage par rapport à une discontinuité formée entre deux surfaces métalliques susceptibles d'être décalées en hauteur l'une par rapport à l'autre, dans lequel un tel décalage n'affecte pas les mesures. L'invention a également pour objet un dispositif pour la mise en oeuvre de ce procédé.

A cet effet et conformément à la présente invention, il est proposé un procédé de positionnement latéral d'un organe par rapport à une discontinuité formée entre deux surfaces métalliques susceptibles d'être décalées en hauteur l'une par rapport à l'autre, selon lequel on utilise au moins une sonde comportant deux bobines disposées symétriquement par rapport à un axe contenu dans un plan normal auxdites surfaces et passant par la discontinuité caractérisé en ce que ladite sonde est une sonde à courants de Foucault, que l'on déplace les bobines indépendamment l'une de l'autre selon une direction normale auxdites surfaces, de façon à égaler les distances séparant chaque bobine de la surface en vis-à-vis quel que soit le décalage existant entre lesdites surfaces.

Grâce à ces caractéristiques, on voit que chaque bobine de la sonde est maintenue en permanence à une distance constante de la surface de la pièce en vis-à-vis, et cela quel que soit le décalage en hauteur existant entre ces surfaces et quelles que soient les variations de ce décalage.

Conformément à un mode de réalisation particulier de l'invention, on traite les signaux aux bornes de chacune des bobines afin d'obtenir pour chacune d'elles un signal qui varie avec la distance séparant cette bobine de la surface en vis-à-vis et on déplace chacune des bobines selon ladite direction en fonction de la valeur du signal qui lui correspond, de façon à maintenir les bobines à une distance égale par rapport aux surfaces en vis-à-vis.

Dans une variante de ce mode de réalisation on associe un capteur de proximité à chacune des bobines de la sonde et on déplace chacune des bobines selon ladite direction en fonction de la valeur des signaux délivrés par les détecteurs de proximité, de façon à maintenir les bobines à une distance égale par rapport aux surfaces en vis-à-vis. Chaque capteur de proximité peut notamment être constitué par un capteur à courants de Foucault comportant une seule bobine et fonctionnant en proximètre.

Pour la mise en oeuvre d'un autre mode de réalisation de l'invention, il est proposé un dispositif de positionnement latéral d'un organe par rapport à une discontinuité formée entre deux surfaces métalliques susceptibles d'être décalées en hauteur l'une par rapport à l'autre, ce dispositif comprenant au moins une sonde comportant deux bobines disposées symétriquement par rapport à un axe contenu dans un plan normal auxdites surfaces et passant par la discontinuité, caractérisé en ce que ladite sonde est une sonde à courants de Foucault, chacune des bobines étant montée sur un mécanisme respectif qui est sollicité en appui contre la surface en vis-à-vis par des moyens élastiques, de telle sorte que chaque bobine est maintenue à une distance constante et égale par rapport à la surface en vis-à-vis, quel que soit le décalage existant entre lesdites surfaces. De préférence, chaque mécanisme comprend au moins une roulette dont l'axe est disposé sensiblement parallèlement à la discontinuité, ladite roulette étant sollicitée en appui contre la surface en vis-à-vis par les moyens élastiques.

Pour la mise en oeuvre du premier mode de réalisation de l'invention, il est proposé un dispositif de positionnement latéral d'un organe par rapport à une discontinuité formée entre deux surfaces métalliques susceptibles d'être décalées en hauteur l'une par rapport à l'autre, ce dispositif comprenant au moins une sonde comportant deux bobines disposées symétriquement par rapport à un axe contenu dans un plan normal auxdites surfaces et passant par la discontinuité et des moyens de traitement des signaux aux bornes de chacune de bobines de la sonde délivrant des signaux représentatifs de la distance séparant chaque bobine de la surface en vis-à-vis, caractérisé en ce que ladite sonde est une sonde à courants de Foucault, le dispositif comprenant de plus des moyens pour déplacer chacune des bobines indépendamment l'une de l'autre selon une direction normale auxdites surfaces en réponse au signal correspondant délivré par les moyens de traitement.

Pour la mise en oeuvre de la variante du premier mode de réalisation de l'invention, le dispositif comprend au moins une sonde comportant deux bobines disposées symétriquement par rapport à un axe contenu dans un plan normal auxdites surfaces et passant par la discontinuité au moins un capteur de proximité associé à chacune des bobines de la sonde, et des moyens de traitement des signaux aux bornes des capteurs associés à chacune des bobines et délivrant des signaux représentatifs de la distance séparant chaque bobine de la surface en vis-à-vis, caractérisé en ce que ladite sonde est une sonde à courants de Foucault, le dispositif comprenant de plus des moyens pour déplacer chacune des bobines indépendamment l'une de l'autre selon une direction normale aux surfaces en réponse au signal correspondant délivré par les moyens de traitement. Dans ce cas, on peut utiliser comme capteurs de proximité des capteurs à courants de Foucault comportant une seule bobine.

On décrira maintenant, à titre d'exemple non limitatif, deux modes de réalisation de l'invention en se référant aux dessins annexés dans lesquels:

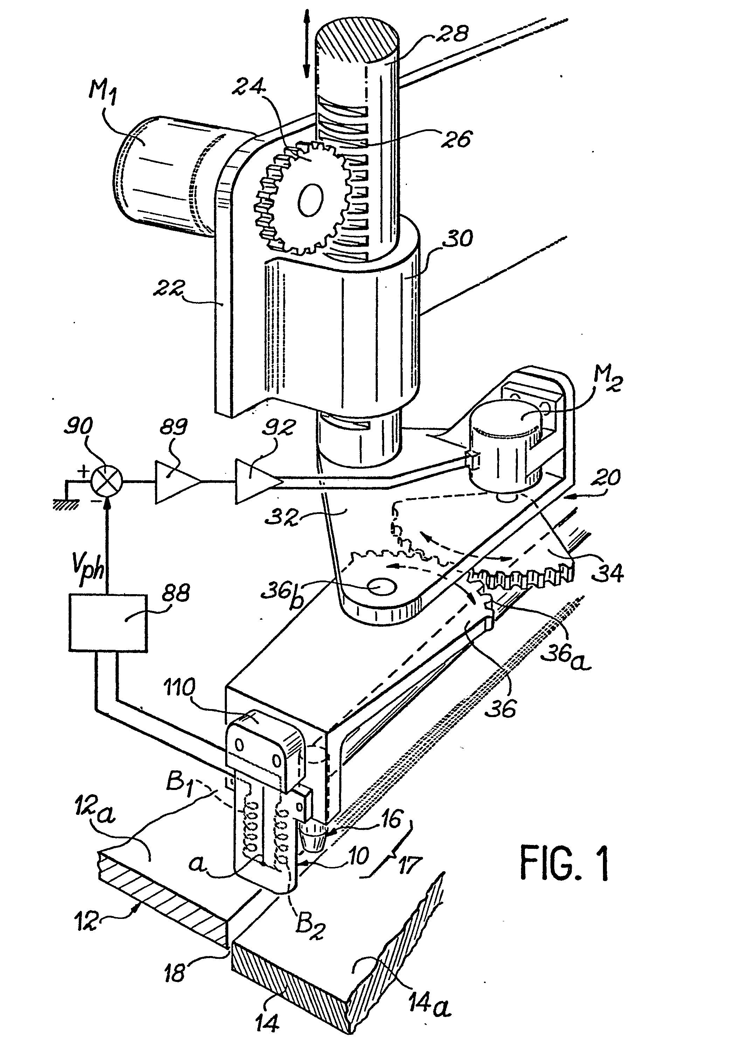

la figure 1 est une vue schématique, en perspective, qui représente un dispositif selon l'invention permettant à la fois de régler en hauteur une torche de soudage par rapport à deux tôles à souder et de disposer cette torche en vis-à-vis du joint défini entre les deux tôles, ainsi que le circuit d'asservissement assurant le positionnement latéral de la tête de soudage,

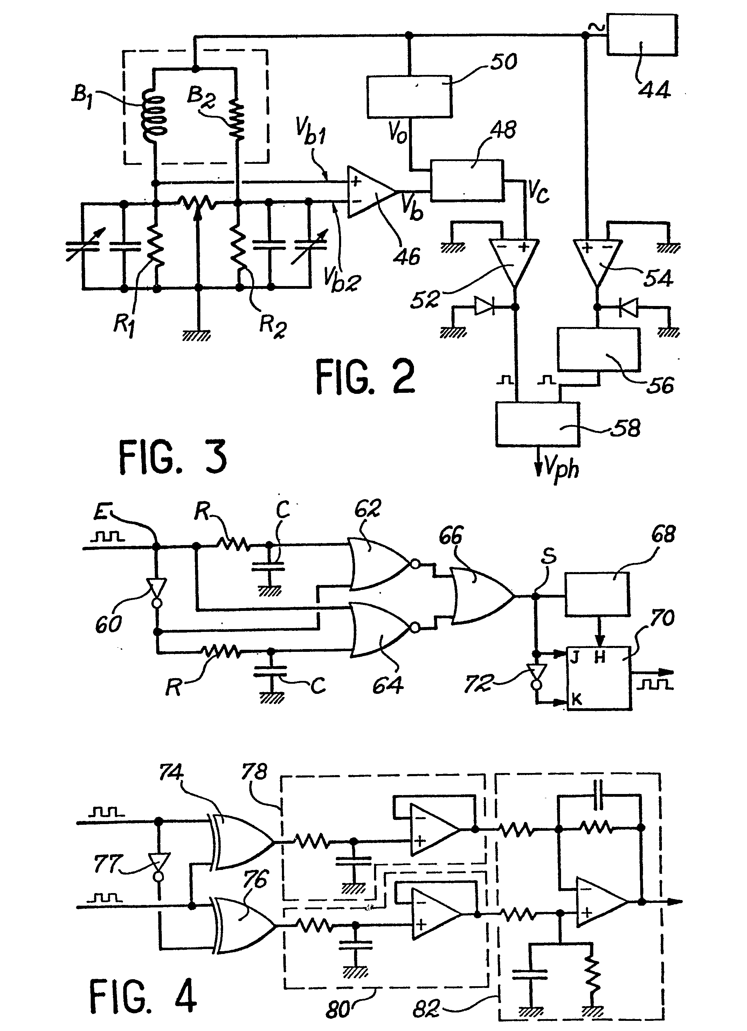

la figure 2 représente le circuit de traitement par différence de phase du signal délivré par le détecteur, ce circuit de traitement étant destiné à être utilisé dans le circuit d'asservissement de la figure 1,

la figure 3 représente le circuit déphaseur logique utilisé dans le circuit de traitement représenté sur la figure 2,

la figure 4 représente le circuit discriminateur de phase utilisé dans le circuit de traitement de la figure 2,

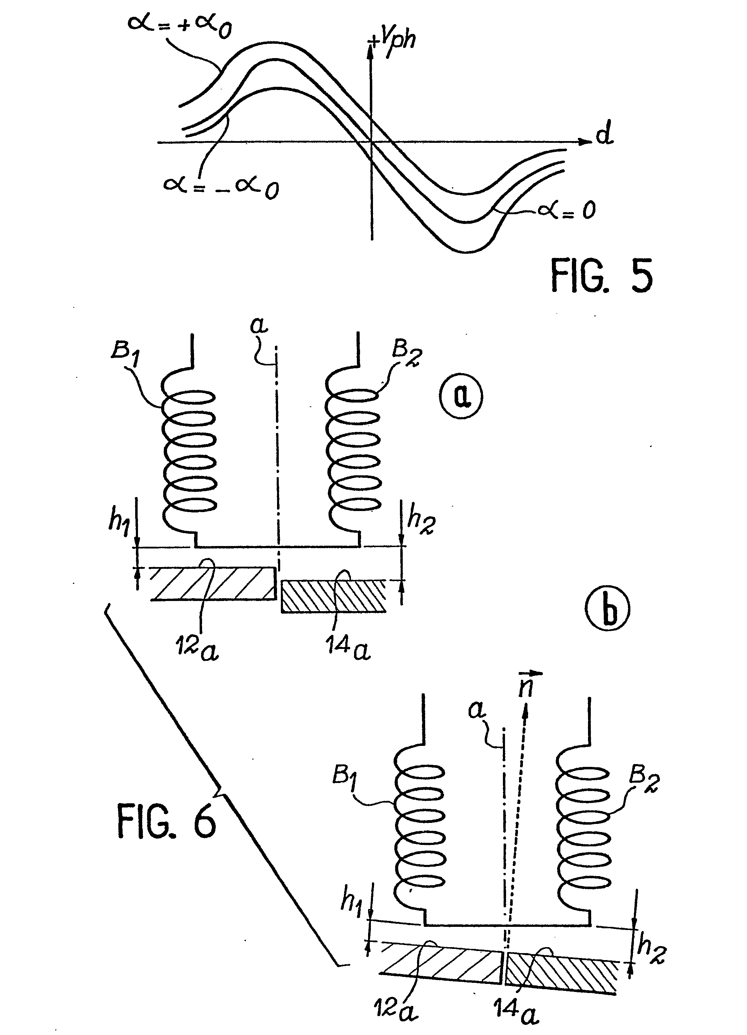

la figure 5 représente les variations du signal $V_{ph}$ délivré par le circuit de traitement de la figure 2 en fonction du décalage latéral $\underline{d}$ du détecteur par rapport à la discontinuité, pour différentes valeurs de l'angle d'inclinaison $\alpha$ de ce détecteur par rapport à la normale aux surfaces soudées,

les figures 6a et 6b représentent schématiquement une sonde à courants de Foucault dont les deux bobines sont disposées respectivement en vis-à-vis de deux surfaces dont les bords sont décalés en hauteur l'un par rapport à l'autre et en vis-à-vis de deux surfaces alignées mais inclinées par rapport à l'axe de la sonde,

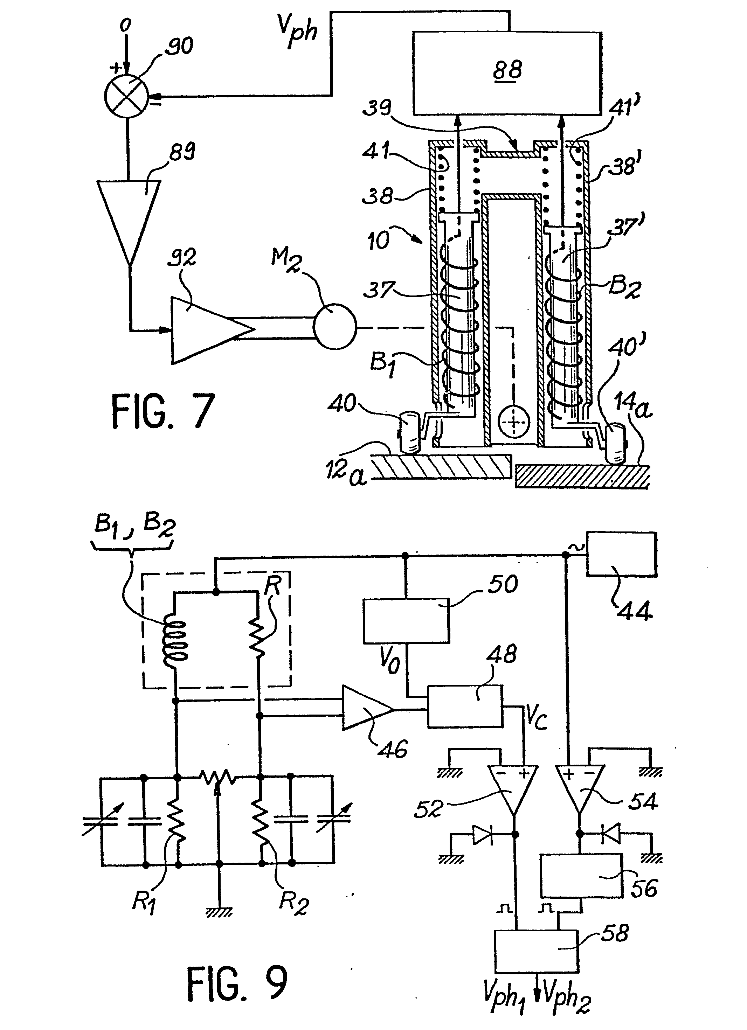

la figure 7 représente le circuit d'asservissement assurant le positionnement latéral de la tête de soudage de la figure 1 lorsque les bobines de la sonde sont maintenues mécaniquement à une distance constante et égale des surfaces en vis-à-vis conformément à un premier mode de réalisation de l'invention,

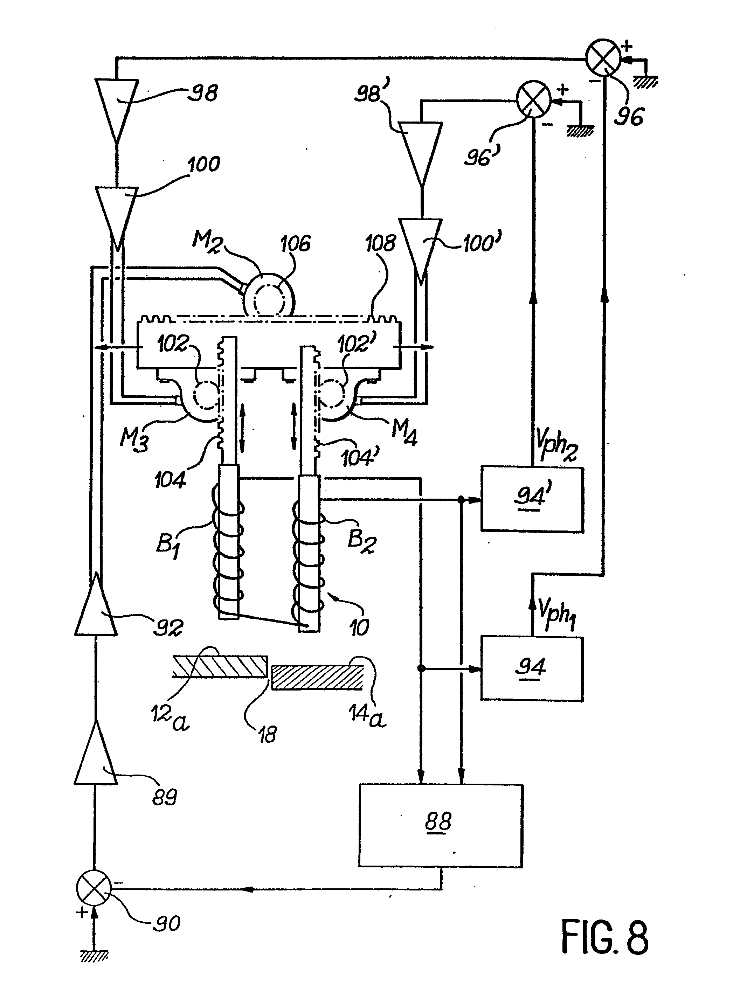

la figure 8 réprésente le circuit d'asservissement assurant le positionnement latéral de la tête de soudage de la figure 1 lorsque les bobines de la sonde se déplacent indépendamment l'une de l'autre sous l'action de moyens d'asservissement sensibles à la distance séparant chaque sonde de la surface en vis-à-vis conformément à un deuxième mode de réalisation de l'invention,

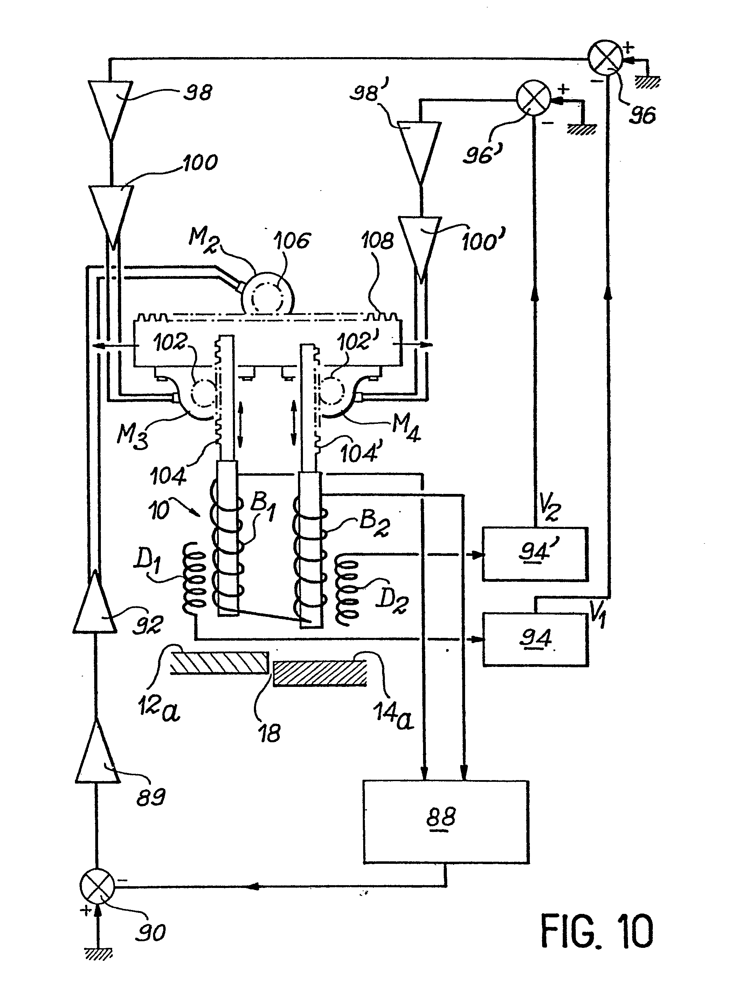

la figure 9 réprésente l'un des circuits de traitement qui sont associés à chacune des bobines de la sonde pour déterminer la distance séparant chacune des bobines de la surface en vis-à-vis et permettre de commander les moyens d'asservissement associés à cette bobine dans le circuit de la figure 8, et

la figure 10 réprésente une variante du circuit d'asservissement de la figure 8.

Le dispositif selon l'invention comprend un détecteur à courants de Foucault 10 qui se compose dans le cas le plus simple d'une sonde à courants de Foucault comme l'illustre la figure 1.

Rappelons que le principe d'une telle sonde consiste à alimenter une bobine par un courant électrique sinusoïdal haute fréquence, de manière à créer un champ alternatif qui induit dans une pièce en matériau conducteur de l'électricité disposée en vis-à-vis de la sonde des courants de Foucault créant en retour un champ qui s'oppose au champ initial et modifie l'impédance de la bobine. Les variations de l'impédance de la bobine donnent donc une indication de la disposition de la bobine par rapport à la pièce en vis-à-vis et de la présence éventuelle d'une discontinuité sur cette pièce.

Afin de pouvoir effectuer une mesure différentielle permettant de déterminer le positionnement de la sonde par rapport à une discontinuité formée sur les surfaces 12a, 14a des pièces 12 et 14 à souder, la sonde comprend deux bobines $B_1$ et $B_2$ dont les axes sont disposés dans un même plan et sont disposés de façon symétrique par rapport à un axe $\underline{a}$ définissant l'axe de la sonde. Dans la variante de réalisation représentée sur la figure 1, les axes des deux bobines $B_1$ et $B_2$ sont parallèles, de telle sorte qu'elles sont disposées toutes deux à égale distance par rapport à l'axe $\underline{a}$.

Bien entendu, d'autres variantes de réalisation peuvent être envisagées. D'une façon générale, toute disposition des bobines $B_1$ et $B_2$ conduisant à une symétrie de courants de Foucault induits peut être utilisée. En pratique, cela signifie que les bobines $B_1$ et $B_2$ sont symétriques par rapport à l'axe $\underline{a}$. Ainsi, les axes des bobines $B_1$ et $B_2$ peuvent être parallèles et disposés dans un plan normal à la discontinuité 18 comme l'illustre la figure 1, ou encore inclinés dans ce plan de façon à se couper selon l'axe $\underline{a}$ et à former avec ce dernier un angle donné. Les bobines $B_1$ et $B_2$ peuvent aussi être disposées dans un même plan selon l'une ou l'autre des dispositions précédentes, ce plan étant incliné par rapport à la normale aux surfaces 12a, 14a et coupant ces surfaces selon une ligne perpendiculaire à la discontinuité 18. Ces bobines $B_1$ et $B_2$ peuvent encore être disposées dans des plans symétriques par rapport au plan normal aux surfaces et perpendiculaire à la discontinuité, ces plans coupant les surfaces selon une ligne perpendiculaire à la discontinuité.

On voit sur la figure 1 que la torche de soudage 16 à positionner est liée mécaniquement de façon rigide au détecteur 10 pour former avec ce dernier la tête de soudage 17 proprement dite. La distance entre le détecteur et la torche est choisie de telle sorte que le joint 18 puisse être considéré localement comme une droite. Elle est donc d'autant plus petite que le rayon de courbure minimum du joint à souder est faible. Cette distance est également déterminée en fonction de la précision souhaitée.

On a représenté à titre d'exemple sur la figure 1 l'ensemble des moyens mécaniques permettant de positionner la tête 17 par rapport aux deux tôles à souder 12 et 14 définissant entre elles le joint 18 qui doit être suivi par la torche de soudage 16. Bien que les tôles 12 et 14 soient planes et que le joint 18 soit rectiligne sur la figure, on comprendra que l'invention peut être utilisée quelles que soient les formes des tôles et de la discontinuité.

En particulier, comme on le verra par la suite, l'invention est particulièrement adaptée au cas où il existe entre les bords des tôles 12 et 14 un décalage en hauteur et notamment au cas où ce décalage varie le long du joint 18.

Dans l'exemple de réalisation représenté sur la figure 1, la tête de soudage 17 est portée par un mécanisme 20 permettant à la fois d'assurer son positionnement en hauteur par rapport aux surfaces 12a et 14a et son positionnement latéral par rapport à la ligne de soudure 18.

Le mécanisme de positionnement 20 de la tête de soudage comprend un bras de supportage 22 relié à un porteur mobile (non représenté) permettant à la tête de soudage de se déplacer le long du joint 18. Le bras 22 supporte un moteur électrique $M_1$ dont l'arbre de sortie horizontal est solidaire d'un pignon 24 qui s'engrène dans une crémaillère 26 formée sur une colonne verticale 28 guidée par un manchon 30 solidaire du bras 22, de façon à pouvoir se déplacer de bas en haut et de haut en bas sous l'action du moteur $M_1$. Ce premier ensemble permet de positionner la tête de soudage 17 en hauteur par rapport au joint 18.

La colonne 28 porte à son extrémité inférieure une plaque horizontale 32 qui supporte un deuxième moteur $M_2$ dont l'arbre de sortie vertical entraîne en rotation un secteur circulaire denté 34 qui s'engrène sur un autre secteur denté 36 monté pivotant ainsi que le secteur 34 en dessous de la plaque 32. Le détecteur 10 et la torche de soudage 16 constituant la tête de soudage 17 sont fixés sur le secteur denté 36 du côté opposé à la denture 36a de ce dernier par rapport à l'axe de pivotement 36b, les axes du détecteur et de la torche étant alignés avec l'axe 36b. Comme le montre la figure 1, le détecteur 10 est placé en avant de la torche de soudage dans le sens de déplacement de la tête 17. Ce deuxième ensemble permet de déplacer latéralement la tête 17 par rapport à la ligne de soudure 18.

En plus de la tête de soudage 17 et du mécanisme de positionnement 20, le dispositif de positionnement selon l'invention comprend, comme l'illustre la figure 1, un circuit de traitement électronique 88 dans lequel sont injectés les signaux en provenance du détecteur 10. Le circuit de traitement 88 délivre un signal $V_{ph}$ qui est injecté à l'entrée — d'un soustracteur 90 dont l'entrée + est raccordée à la terre. Le soustracteur 90, qui pourrait éventuellement être remplacé par un inverseur, délivre un signal $\epsilon$ qui alimente un étage d'adaptation 89 dont la sortie est raccordée à un amplificateur de puissance 92 commandant le moteur $M_2$ pour effectuer le calage latéral de la tête de soudage 17 sur le joint 18. Le moteur $M_2$ est ainsi asservi à la réponse fournie par le circuit de traitement 88.

Bien entendu, le moteur $M_1$ commandant le positionnement en hauteur de la tête de soudage 17 par rapport aux surfaces des pièces à souder pourra faire l'objet le cas échéant d'un asservissement à partir des informations de proximité fournies soit par les bobines $B_1$ et $B_2$ soit par des capteurs additifs.

On a représenté sur la figure 2 le circuit de traitement électronique 88 des signaux délivrés par la sonde à courants de Foucault 10. Ce circuit permet d'effectuer une mesure différentielle de phase utilisable notamment pour le positionnement de la tête de soudage sur la ligne de soudure.

Afin de permettre la détection des variations de l'impédance de chacune des bobines $B_1$ et $B_2$ de la sonde, celles-ci sont placées dans un pont de mesure symétrique dont les deux branches $R_1$ et $R_2$ servent à assurer l'équilibre. Le pont de mesure ainsi constitué est alimenté entre le point haut défini par la jonction des bobines $B_1$ et $B_2$ et le point bas défini par la jonction des branches $R_1$ et $R_2$ par un signal sinusoïdal haute fréquence (par exemple 240 kHz) provenant d'un oscillateur H.F. 44. Les signaux de sortie sinusoïdaux $V_{b1}$ et $V_{b2}$ pris respectivement aux bornes communes des branches $B_1$ et $R_2$ et $B_2$ et $R_2$ sont transmis respectivement à la borne + et à la borne — d'un amplificateur différentiel 46 qui délivre un signal sinusoïdal $V_b$. Le signal $V_b$ est injecté dans un sommateur 48 avec un signal $V_0$ qui correspond au signal injecté dans le pont de mesure par l'oscillateur 44 et déphasé de $\frac{\pi}{2}$ par un déphaseur 50. Le signal sinusoïdal $V_c$ délivré par le sommateur 48 est injecté à la borne + d'un comparateur 52 dont la borne — est connectée à la terre. De même, le signal sinusoïdal délivré par l'oscillateur 44 est injecté à la borne + d'un autre comparateur 54 dont la borne — est également reliée à la terre. Les comparateurs 52 et 54 délivrent des signaux logiques positifs pour les alternances positives des signaux sinusoïdaux qui leur sont injectés. Le signal logique délivré par le comparateur 54 est représentatif des alternances positives du signal sinusoïdal délivré par l'oscillateur 44. Il est injecté dans un déphaseur logique 56 délivrant un signal déphasé d'une valeur donnée par rapport au signal d'entrée. Ce signal déphasé est à son tour injecté dans un discriminateur de phase 58 en même temps que le signal délivré par le comparateur 52, ce dernier étant représentatif de la valeur des signaux aux bornes des bobines $B_1$ et $B_2$. Le discriminateur de phase 58 délivre un signal $V_{ph}$ représentatif de la différence de phase entre le signal injecté dans le pont et celui aux bornes des bobines.

Comme le montre la figure 3, le déphaseur logique 56 comprend un inverseur 60 et deux circuits RC permettant de retarder le signal injecté en E dans le déphaseur et le signal sortant de l'inverseur 60. Le signal injecté dans le déphaseur et retardé par l'un des circuits RC, ainsi que le signal sortant de l'inverseur 60 sont injectés dans une première porte NON/OU 62. De même, le signal injecté en E dans le déphaseur 56 ainsi que le signal sortant de l'inverseur 60 et retardé par le second circuit RC sont injectés dans une seconde porte NON/OU 64. Les signaux délivrés par chacune des portes NON/OU 62 et 64 sont injectés dans une porte OU 66 qui délivre en S un signal logique dont chaque impulsion correspond au début et à la fin d'un créneau du signal injecté à l'entrée E du déphaseur 56. Ce signal logique est injecté à l'entrée d'un monostable 68, à l'entrée J d'une bascule JK 70 et, par l'intermédiaire d'un inverseur 72, à l'entrée K de cette dernière. Le signal de sortie du monostable 68, qui correspond à une suite de créneaux de durée déterminée débutant avec un retard déterminé par rapport à chaque impulsion du signal délivré en S, est injecté à l'entrée H de la bascule JK dont le signal de sortie délivré en Q est identique au signal injecté à l'entrée E du déphaseur mais déphasé selon une valeur déterminée par le retard imposé par le monostable 68. Ce signal de sortie est injecté dans le discriminateur de phase 58.

Comme le montre la figure 4, les deux entrées du discriminateur de phase 58 sont reliées, d'une part, à une porte OU EXCLUSIF 74 et, d'autre part, à une porte OU EXCLUSIF 76 après passage dans un inverseur 78 du signal provenant du déphaseur logique 56. La sortie de chacune des portes OU EXCLUSIF 74, 76 est reliée à un intégrateur 78, 80 dont les signaux de sortie, représentant la composante continue de chacun des signaux injectés à l'entrée du discriminateur de phase, sont injectés dans un soustracteur 82 délivrant le signal de sortie continu $V_{ph}$ dont la valeur correspond à la différence de phase entre le signal délivré par le déphaseur 56 et le signal issu du comparateur 52.

Les variations du signal $+V_{ph}$ délivré par le circuit de traitement qui vient d'être décrit en se référant aux figures 2 à 4 en fonction du décalage latéral $\underline{d}$ de l'axe $\underline{a}$ de la sonde par rapport au milieu de la discontinuité 18 sont représentées sur la figure 5, pour différentes valeurs de l'inclinaison $\alpha$ de la sonde. Rappelons que le déplacement correspondant de la sonde 10 est obtenu au moyen du moteur $M_2$ sur la figure 1. La courbe de la figure 5 est remarquable, d'une part, par le fait que, lorsque l'angle $\alpha$ est nul, le signal $V_{ph}$ devient nul lorsque le décalage $\underline{d}$ est nul et, d'autre part, par le fait que le signal $V_{ph}$ est positif lorsque la sonde est décalée d'un côté par rapport à la discontinuité et négatif lorsque la sonde est décalée de l'autre côté par rapport à cette discontinuité. Ces deux particularités de la courbe de la figure 5 permettent de réaliser un repérage de la position et du sens de déplacement de la sonde par rapport à la discontinuité. Ainsi, quand la sonde se déplace transversalement par rapport à la discontinuité 18, et de la gauche vers la droite en considérant la figure 1, le signal $V_{ph}$ passera d'une tension positive à une tension négative.

On remarquera que la courbe de la figure 5 est tracée dans le cas où le déphasage des deux signaux appliqués au discriminateur de phase 58 est réglé de telle sorte que la tension $V_{ph}$ soit nulle lorsque l'angle $\alpha$ est nul et lorsque le centre de la discontinuité 18 est placé exactement dans le prolongement de l'axe $\underline{a}$ de la sonde 10. Le réglage de ce déphasage s'effectue au moyen du déphaseur logique 56 en réglant de façon appropriée les impulsions délivrées par le monostable 68 et notamment le retard de ces impulsions par rapport aux impulsions délivrées en S par la porte OU 66. En effet, le déphasage du signal délivré par l'oscillateur au moyen de déphaseur logique 56 permet de mettre ce signal en quadrature de phase avec le signal délivré par le comparateur 52 lorsque l'axe $\underline{a}$ de la sonde passe par le milieu de la discontinuité 18, ce qui conduit à un signal de sortie $V_{ph}$ du discriminateur de phase 58 nul dans cette position.

On remarquera également que la courbe de la figure 5 est plus ou moins aplatie selon la valeur de la distance $\underline{h}$ qui sépare la sonde 10 de la surface 18. Ainsi, la sensibilité et donc la précision de la localisation de la discontinuité augmentent lorsque la sonde est plus proche de la surface des tôles. A l'inverse, la mesure n'est plus significative au-delà d'une certaine distance qui varie avec la nature de la pièce et par exemple la fréquence de travail (dans des conditions d'expérimentation particulières, cette distance a été d'environ 15 mm). En revanche, la largeur de la discontinuité à détecter est pratiquement sans incidence sur le positionnement de la sonde, dans la limite de la compatibilité avec la dimension du détecteur (écart entre les bobines).

Enfin, on voit sur la figure 5 que la courbe de réponse du circuit de traitement 88 s'annule normalement (pour un réglage donné du monostable 68) lorsque l'axe du détecteur est disposé selon la normale aux surfaces des pièces à souder et dans l'alignement de la ligne de soudure, cette courbe se décalant vers la droite ou vers la gauche lorsque l'axe du détecteur est incliné d'un angle $\alpha$ positif ou négatif par rapport à cette normale. Il apparaît ainsi que la mesure du décalage latéral d de la torche de soudage par rapport à la ligne de soudure est perturbée par l'angulation que fait le capteur par rapport à la normale à la surface métallique, à l'endroit du joint.

D'autre part, on voit sur les figures 6a et 6b, qui représentent la sonde 10 constituée de deux bobines $B_1$ et $B_2$ présentant un axe a, respectivement en vis-à-vis de deux surfaces 12a et 14a décalées en hauteur l'une par rapport à l'autre et en vis-à-vis de deux surfaces 12a et 14a alignées mais dont la normale n est décalée angulairement par rapport à l'axe a de la sonde, que ces deux situations sont pratiquement équivalentes pour le capteur 10. En effet, dans les deux cas, les hauteurs $h_1$ et $h_2$ des bobines $B_1$ et $B_2$ par rapport aux surfaces en vis-à-vis sont différentes.

Le rapprochement des figures 5 et 6 fait donc apparaître qu'une différence de hauteur des bords des tôles à souder introduit une perturbation dans la mesure du décalage latéral d de la torche de soudage par rapport à la ligne de soudure.

Dans le premier mode de réalisation de l'invention représenté sur la figure 7, ce risque est évité en montant chacune des bobines $B_1$ et $B_2$ sur une pièce 37, 37' mobile dans un tube de guidage 38, 38' formé dans un boîtier 39. Les tubes de guidage 38, 38' autorisent un déplacement des bobines selon une direction normale aux surfaces 12a et 14a des tôles à souder. Chacune des pièces 37, 37' se prolonge du côté de l'extrémité inférieure des bobines $B_1$ et $B_2$ par une partie en porte-à-faux dont l'extrémité porte une roulette 40, 40'. Les roulettes 40 et 40' se trouvent ainsi décalées par rapport à l'extrémité des bobines, ce qui permet de ne pas perturber les signaux délivrés par celles-ci. Enfin, des ressorts 41, 41' disposés à l'intérieur du boîtier 39 sollicitent chacune des pièces 37, 37' portant les bobines $B_1$, $B_2$ vers les surfaces 12a et 14a respectivement, de telle sorte que les roulettes 40 et 40' sont maintenues en permanence en appui contre ces surfaces. Les distances séparant les extrémités de chacune des bobines de la surface en vis-à-vis sont ainsi constantes et égales.

Bien entendu, comme on l'a déjà décrit en se référant à la figure 1, les signaux délivrés par les bobines $B_1$ et $B_2$ sont traités dans le circuit 88 dont le signal de sortie $V_{ph}$ est injecté à l'entrée — du soustracteur 90. Le signal de sortie $\varepsilon$ de ce dernier alimente ensuite l'étage d'adaptation 89 et l'amplificateur de puissance 92 commandant le moteur $M_2$.

Sur la figure 8, on a représenté un deuxième mode de réalisation de l'invention dans lequel le risque de voir de signal de sortie $V_{ph}$ du circuit de traitement 88 perturbé par un éventuel décalage en hauteur des bords des tôles à souder est évité en réalisant un asservissement en proximité de chacune des bobines $B_1$ et $B_2$ par rapport aux surfaces 12a et 14a des tôles en vis-à-vis. Ainsi, en plus du circuit de traitement 88 et des moyens d'asservissement 90, 89 et 92 assurant par l'intermédiaire du moteur $M_2$ le positionnement latéral de la tête de soudage par rapport au joint, on voit sur la figure 8 que les signaux délivrés par chacune des bobines $B_1$ et $B_2$ sont injectés respectivement dans des circuits de traitement 94 et 94' assurant par l'intermédiaire de moyens d'asservissement appropriés la commande du déplacement vertical de chacune des bobines afin d'égaler les distances séparant celles-ci des surfaces 12a, 14a en vis-à-vis, quel que soit le décalage existant entre ces surfaces.

De façon plus précise, le signal de sortie $V_{ph1}$ délivré par le circuit de traitement 94 est injecté à l'entrée — d'un soustracteur 96 dont l'entrée + est raccordée à la terre. Le soustracteur 96 délivre un signal qui alimente un étage d'adaptation 98 dont le signal de sortie est injecté dans un amplificateur de puissance 100 commandant un moteur $M_3$. De façon comparable, le signal de sortie $V_{ph2}$ délivré par le circuit de traitement 94' est injecté à l'entrée — d'un soustracteur 96' dont l'entrée + est raccordée à la terre. Le soustracteur 96' délivre un signal qui alimente un étage d'adaptation 98' dont le signal de sortie est injecté dans un amplificateur de puissance 100' commandant un moteur $M_4$.

Comme l'illustre schématiquement la figure 8, chacun des moteurs $M_3$ et $M_4$ commande respectivement par l'intermédiaire d'un pignon 102, 102' à axe horizontal le déplacement perpendiculairement aux surfaces 12a, 14a des bobines $B_1$ et $B_2$. Il est ainsi possible de maintenir les distances entre les extrémités des bobines $B_1$ et $B_2$ et les surfaces 12a et 14a en vis-à-vis constamment égales entre elles, quels que soient les décalages pouvant exister entre ces surfaces au niveau du joint 18.

Pour faciliter la compréhension, on a représenté sur la figure 8 le moteur $M_2$ assurant le positionnement latéral de la tête de soudage comme entraînant un pignon 106 à axe vertical s'engrenant sur une crémaillère horizontale 108 portant les moteurs $M_3$ et $M_4$. Toutefois, on comprendra aisément qu'une structure comparable peut aussi bien être réalisée dans le dispositif représenté sur la figure 1, les moteurs $M_3$ et $M_4$ étant alors logés dans un boîtier 110 disposé au-dessus du détecteur 10.

On a représenté à titre d'exemple sur la figure 9 un exemple de réalisation des circuits de traitement 94 et 94'. Ce circuit de traitement est semblable au circuit de la figure 2, de sorte qu'on pourra se reporter utilement à la description de ce dernier circuit pour tout complément à ce sujet. A cet effet, les chiffres de référence de la figure 2 ont été reportés sur la figure 9. La seule caractéristique qui distingue le circuit de la figure 9 du circuit de la figure 2 est que l'un ou l'autre des signaux $V_{b1}$ et $V_{b2}$ injectés à l'entrée de l'amplificateur différentiel 46 dans ce dernier circuit est remplacé par un signal proportionnel et en phase avec celui de l'oscillateur 44. En pratique, cette différence se concrétise par le fait qu'une résistance R remplace la bobine $B_1$ ou la bobine $B_2$ selon qu'il s'agit du circuit de traitement 94 ou du circuit de traitement 94'. Ce montage permet de faire une mesure différentielle de phase $V_{ph1}$, $V_{ph2}$ entre le signal issu de la bobine correspondante et le signal émis par l'oscillateur 44 pris comme référence. Il permet donc d'effectuer une mesure de proximité, c'est-à-dire la mesure de la distance h séparant la bobine $B_1$ de la surface 12a et la bobine $B_2$ de la surface 14a selon qu'il s'agit du circuit 94 ou du circuit 94'.

Enfin, on a représenté sur la figure 10 une variante de réalisation du circuit de la figure 8. Les éléments semblables aux éléments de ce dernier circuit ont été désignés par les mêmes références, et ils ne seront pas décrits à nouveau.

On voit que le circuit de la figure 10 se distingue du circuit de la figure 8 par le fait qu'on a associé à chacune des bobines $B_1$ et $B_2$ de la sonde de positionnement 10 un détecteur à courants de Foucault $D_1$ et $D_2$ respectivement. Chacun des détecteurs $D_1$ et $D_2$ comprend une bobine unique dont l'axe est orienté selon la normale à la surface 12a, 14a, en vis-à-vis. Les détecteurs $D_1$ et $D_2$ constituent des détecteurs de proximité dont les signaux de sortie sont injectés respectivement dans les circuits de traitement 94 et 94' à la place des signaux de sortie délivrés par chacune des bobines $B_1$ et $B_2$ dans la variante de réalisation de la figure 8. Ces circuits de traitement sont semblables au circuit décrit précédemment en se référant à la figure 9. Ils délivrent respectivement des signaux $V_1$ et $V_2$ qui sont représentatifs de la distance séparant la bobine associée de la surface en vis-à-vis. On conçoit que ces signaux peuvent être utilisés de la même manière que les signaux $V_{ph1}$, $V_{ph2}$ dans la variante de la figure 8 pour maintenir les bobines $B_1$ et $B_2$ à une distance égale par rapport à la surface 12a, 14a en vis-à-vis, en agissant sur les moteurs $M_3$ et $M_4$.

Bien entendu, on comprendra que les moyens de commande mécaniques et les moyens de traitement électroniques des signaux qui viennent d'être décrits ne sont donnés qu'à titre d'exemple non limitatif de la portée de l'invention.

Enfin, on notera que la mise en oeuvre du dispositif de positionnement qui vient d'être décrit suppose que les signaux délivrés par chacune des bobines ne soient pas trop perturbés par la proximité de la tôle qui ne leur fait pas face. A cet effet, la fréquence de fonctionnement du dispositif est, de préférence, supérieure à 300 kHz, ce qui correspond à une épaisseur de peau de 0,1 mm pour un métal très bon conducteur de l'électricité tel que le cuivre.

## Revendications

1. Procédé de positionnement latéral d'un organe (16) par rapport à une discontinuité (18) formée entre deux surfaces métalliques (12a, 14a) susceptibles d'être décalées en hauteur l'une par rapport à l'autre, selon lequel on utilise au moins une sonde (10) comportant deux bobines ($B_1$, $B_2$) disposées symétriquement par rapport à un axe (<u>a</u>) contenu dans un plan normal auxdites surfaces et passant par la discontinuité, caractérisé en ce que ladite sonde (10) est une sonde à courants de Foucault et que l'on déplace les bobines ($B_1$, $B_2$) indépendamment l'une de l'autre selon une direction normale auxdites surfaces (12a, 14a), de façon à égaler les distances séparant chaque bobine de la surface en vis-à-vis, quel que soit le décalage existant entre lesdites surfaces.

2. Procédé selon la revendication 1, caractérisé en ce que l'on traite les signaux aux bornes de chacune des bobines ($B_1$, $B_2$) afin d'obtenir pour chacune d'elles un signal ($V_{ph1}$, $V_{ph2}$) qui varie avec la distance séparant cette bobine de la surface en vis-à-vis et en ce que l'on déplace chacune des bobines selon ladite direction en fonction de la valeur du signal qui lui correspond, de façon à maintenir les bobines à une distance égale par rapport aux surfaces en vis-à-vis.

3. Procédé selon la revendication 1, caractérisé en ce que l'on associe un capteur de proximité ($D_1$, $D_2$) à chacune des bobines ($B_1$, $B_2$) de la sonde et en ce que l'on déplace chacune des bobines selon ladite direction en fonction de la valeur des signaux ($V_1$, $V_2$) délivrés par les détecteurs de proximité, de façon à maintenir les bobines à une distance égale par rapport aux surfaces en vis-à-vis.

4. Procédé selon la revendication 3, caractérisé en ce que l'on utilise comme capteurs de proximité ($D_1$, $D_2$) des capteurs à courants de Foucault comportant une seule bobine, en ce que l'on traite les signaux aux bornes de ces capteurs afin d'obtenir pour chacun d'eux un signal ($V_1$, $V_2$) qui varie avec la distance séparant ce capteur de la surface en vis-à-vis, et en ce que l'on déplace chacune des bobines en fonction de la valeur de ce signal.

5. Dispositif de positionnement latéral d'un organe (16) par rapport à une discontinuité (18) formée entre deux surfaces métalliques (12a, 14a) susceptibles d'être décalées en hauteur l'une par rapport à l'autre, comprenant au moins une sonde (10) comportant deux bobines ($B_1$, $B_2$) disposées symétriquement par rapport à un axe (<u>a</u>) contenu dans un plan normal auxdites surfaces et passant par la discontinuité, caractérisé en ce que ladite sonde (10) est une sonde à courants de Foucault et que chacune des bobines ($B_1$, $B_2$) est montée sur un mécanisme (37, 37') respectif qui est sollicité en appui contre la surface en vis-à-vis par des moyens élastiques (41, 41'), de telle sorte que chaque bobine est maintenue à une distance constante et égale par rapport à la surface (12a, 14a) en vis-à-vis, quel que soit le décalage existant entre lesdites surfaces.

6. Dispositif selon la revendication 5, caractérisé en ce que chaque mécanisme (37, 37') comprend au moins une roulette (40, 40') dont l'axe est disposé sensiblement parallèlement à la discontinuité (18), ladite roulette étant sollicitée en appui contre la surface en vis-à-vis par lesdits moyens élastiques (41, 41').

7. Dispositif de positionnement latéral d'un organe (16) par rapport à une discontinuité (18) formée entre deux surfaces métalliques (12a, 14a) susceptibles d'être décalées en hauteur l'une par rapport à l'autre, comprenant au moins une sonde (10) comportant deux bobines ($B_1$, $B_2$) disposées symétriquement par rapport à un axe (<u>a</u>) contenu dans un plan normal auxdites surfaces et passant par la discontinuité, et des moyens de traitement (94, 94') des signaux aux bornes de chacune des bobines ($B_1$, $B_2$) de la sonde délivrant des signaux ($V_{ph1}$, $V_{ph2}$ représentatifs de la distance séparant chaque bobine de la surface en vis-à-vis, caractérisé en ce que la sonde (10) est une sonde à courants de Foucault, le dispositif comprenant de plus des moyens ($M_3$, 102, 104, $M_4$, 102', 104') pour déplacer chacune des bobines indépendamment l'une de l'autre selon une direction normale auxdites surfaces en réponse au signal correspondant délivré par les moyens de traitement.

8. Dispositif de positionnement latéral d'un organe (16) par rapport à une discontinuité (18) formée entre deux surfaces métalliques (12a, 14a) susceptibles d'être décalées en hauteur l'une par rapport à l'autre, comprenant au moins une sonde (10) comportant deux bobines (B₁, B₂) disposées symétriquement par rapport à un axe (a) contenu dans un plan normal auxdites surfaces et passant par la discontinuité au moins un capteur de proximité (D₁, D₂) associé à chacune des bobines de la sonde, et des moyens (94, 94') de traitement des signaux aux bornes des capteurs associés à chacune des bobines et délivrant des signaux (V₁, V₂) représentatifs de la distance séparant chaque bobine de la surface en vis-à-vis, caractérisé en ce que la sonde (10) est une sonde à courants de Foucault, le dispositif comprenant de plus des moyens (M₃, 102, 104, M₄, 102', 104') pour déplacer chacune des bobines indépendamment l'une de l'autre selon une direction normale aux surfaces en réponse au signal correspondant délivré par les moyens de traitement.

9. Dispositif selon la revendication 8, caractérisé en ce que les capteurs de proximité (D₁, D₂) sont des capteurs à courants de Foucault comportant une seule bobine.

## Claims

1. Process for the lateral positioning of a member (16) with respect to a discontinuity (18) formed between two metallic surfaces (12a, 14a) which are capable of being vertically offset with respect to one another, employing at least one probe (10) having two coils (B₁, B₂) symmetrically disposed with respect to an axis (a) contained in a plane normal to said surfaces and passing through the discontinuity, characterized in that said probe (10) is a Foucault current detector, and in that the coils (B₁, B₂) are displaced independently of one another in a direction normal to said surfaces (12a, 14a) whereby to equalize the distances separating each coil from its facing surface, whatever the distances by which said surfaces are offset.

2. A process according to Claim 1, characterized in that the signals at the terminals of each coil (B₁, B₂) are processed to provide for each a respective signal (V$_{ph1}$, V$_{ph2}$) varying with the distance separating said coil from its facing surface, and in that each of the coils is displaced in said direction as a function of the value of the corresponding signal, whereby to keep the coils equidistant from their respective surfaces.

3. A process according to Claim 1, characterized in that a frequency detector (D₁, D₂) is associated with each coil (B₁, B₂) of the probe, and in that each of the coils is displaced in said direction as a function of the value of signals (V₁, V₂) delivered by the proximity detectors, whereby to keep the coils equistant from their respective surfaces.

4. A process according to Claim 3, characterized in that the proximity detector (D₁, D₂)( are Foucault current detectors comprising a single coil, and in that the signals at the terminals of said detectors are processed to provide for each of them a signal (V₁, V₂) which varies with the distance separating the detector from its respective surface, and in that each of the coils are displaced as a function of the value of said signal.

5. Apparatus for the lateral positioning of a member (16) with respect to a discontinuity (18) formed between two metallic surfaces (12a, 14a) capable of being vertically offset with respect to one another, comprising at least one probe (10) having two coils (B₁, B₂) symmetrically disposed with respect to an axis (a) contained in a plane normal to said surfaces and passing through the discontinuity, characterized in that said probe (10) is a Foucault current detector and in that each of the coils (B₁, B₂) is mounted on a respective mechanism (37, 37') which is urged into contact with its facing surface by elastic means (41, 41'), whereby each coil is maintained at a constant and equal distance from its respective surface (12a, 14a), whatever the distance between said surfaces.

6. Apparatus according to Claim 5, characterized in that each mechanism (37, 37') comprises at least one wheel (40, 40') whose axis is disposed substantially parallel to the discontinuity (18), said wheel being urged into contact with said respective surface by said elastic means (41, 41').

7. Apparatus for the lateral positioning of a member (16) with respect to a discontinuity (18) formed between two metal surfaces (12a, 14a) capable of being vertically offset with respect to one another, comprising at least one probe (10) having two coils (B₁, B₂) symmetrically disposed with respect to an axis (a) contained in a plane normal to said surfaces and passing through the discontinuity, and treatment means (94, 94') of signals at the terminals of each of the coils (B₁, B₂) of the probe delivering signals (V$_{ph1}$, V$_{ph2}$) representing the distance separating each coil from its respective surface, characterized in that the probe is a Foucault current detector, the apparatus additionally comprising means (M₃, 102, 104, M₄, 102', 104') for displacing each coil independently of one another in a direction normal to said surfaces in response to corresponding signals delivered by the processing means.

8. Apparatus for the lateral positioning of a member (16) with respect to a discontinuity (18) formed between two metal surfaces (12a, 14a) capable of being vertically offset with respect to one another, comprising at least one probe (10) having two coils (B₁, B₂) symmetrically disposed with respect to an axis (a) contained in a plane normal to said surfaces and passing through the discontinuity, at least one frequency detector (D₁, D₂) associated with each coil of the probe, and means (94, 94') for processing signals at the terminals of the detector associated with each of the coils and delivering signals (V₁, V₂) representing the distance separating each coil from its respective surface, characterized in that the probe (10) is a Foucault current detector, the apparatus additionally comprising means (M₃, 102, 104, M₄, 102', 104') for displacing each coil independently of one another in a direction normal to the surfaces in response to corresponding signals delivered by the processing means.

9. Apparatus according to Claim 8, characterized in that the proximity detectors (D₁, D₂) are Foucault current detectors comprising a single coil.

**Patentansprüche**

1. Verfahren zum lateralen Positionieren eines Organs (16) in bezug auf eine Unterbrechung (18) zwischen zwei in der Höhe gegeneinander verlagerten metallischen Flächen (12a, 14a) unter Verwendung wenigstens einer Sonde (10), die zwei Spulen ($B_1$, $B_2$) aufweist, die symmetrisch in bezug auf eine Achse (a) angeordnet sind, die in einer Ebene verläuft, die senkrecht auf den genannten Flächen steht und durch die die Unterbrechung verläuft, dadurch gekennzeichnet, dass die Sonde (10) eine Wirbelstromsonde ist und dass man die Spulen ($B_1$, $B_2$) unabhängig voneinander in einer Richtung versetzt, die senkrecht auf den Oberflächen (12a, 14a) steht, um die Distanzen auszugleichen, die jede Spule von der ihr gegenüberstehenden Oberfläche hat, je nach Versatz, der zwischen den beiden Flächen besteht.

2. Verfahren nach Anspruch 1, dadurch gekennzeichnet, dass man die Quellensignale von jeder der Spulen ($B_1$, $B_2$) verarbeitet, um aus ihnen ein Signal ($V_{ph1}$, $V_{ph2}$) zu erzeugen, das sich mit der Distanz verändert, die die Spule von der ihr gegenüberstehenden Oberfläche trennt, und dass man jede der Spulen in der genannten Richtung als Funktion der Grösse des ihr zugehörigen Signals so versetzt, dass die Spulen in bezug auf die ihnen gegenüberstehenden Flächen gleiche Abstände aufweisen.

3. Verfahren nach Anspruch 1, dadurch gekennzeichnet, dass man jeder Spule ($B_1$, $B_2$) der Sonde einen Abstandsmessfühler ($D_1$, $D_2$) zuordnet und dass man jede der Spulen in der genannten Richtung in Abhängigkeit der von den Abstandsmessfühlern gelieferten Signale ($V_1$, $V_2$) so versetzt, dass die Spulen in bezug auf die ihnen gegenüberstehenden Flächen auf gleiche Abstände gehalten werden.

4. Verfahren nach Anspruch 3, dadurch gekennzeichnet, dass man als Abstandsmessfühler ($D_1$, $D_2$) Wirbelstrommessfühler verwendet, die eine einzelne Spule aufweisen, und dass man ihre Quellensignale so aufbereitet, dass man aus ihnen ein Signal ($V_1$, $V_2$) erhält, das sich mit der Distanz der Abstandsmessfühler von der gegenüberstehenden Oberfläche ändert, und dass man jede der Spulen in Abhängigkeit von der Grösse des Signals versetzt.

5. Gerät zum lateralen Positionieren eines Organs (16) in bezug auf eine Unterbrechung (18) zwischen zwei in der Höhe gegeneinander verlagerten metallischen Flächen (12a, 14a), mit wenigstens einer Sonde (10), die zwei Spulen ($B_1$, $B_2$) aufweist, die symmetrisch in bezug auf eine Achse (a) angeordnet sind, die in einer zu den Flächen senkrechten Ebene verläuft, die durch die Unterbrechung verläuft, dadurch gekennzeichnet, dass die Sonde (10) eine Wirbelstromsonde ist und dass jede der Spulen ($B_1$, $B_2$) an einem entsprechenden Mechanismus (37, 37') montiert ist, der in bezug auf die gegenüberstehende Oberfläche mittels elastischer Einrichtungen (41, 41') so gelagert ist, dass jede Spule in einer Distanz gehalten wird, die in bezug auf die gegenüberstehende Fläche konstant ist, wie auch der Versatz der beiden Oberflächen sein mag.

6. Gerät nach Anspruch 5, dadurch gekennzeichnet, dass jeder der Mechanismen (37, 37') wenigstens ein Rad (40, 40') aufweist, deren Achse im wesentlichen parallel zu der Unterbrechung (18) verläuft, und dass das Rad auf der gegenüberliegenden Oberfläche abläuft, gegen die es durch die elastischen Einrichtungen (41, 41') gedrückt ist.

7. Gerät zum lateralen Positionieren eines Organs (16) in bezug auf eine Unterbrechung (18) zwischen zwei in der Höhe gegeinander verlagerten metallischen Flächen (12a, 14a) mit wenigstens einer Sonde (10), die zwei Spulen ($B_1$, $B_2$) aufweist, die symmetrisch in bezug auf eine Achse (a) angeordnet sind, die in einer Ebene verläuft, die senkrecht zu den Oberflächen und durch die Unterbrechung verläuft, und mit Verarbeitungseinrichtungen (94, 94') für die Quellensignale der beiden Spulen ($B_1$, $B_2$) der Sonde, die Signale ($V_{ph1}$, $V_{ph2}$) erzeugt, die für die Abstände repräsentativ sind, die jede Spule von der ihr gegenüberstehenden Fläche trennt, dadurch gekennzeichnet, dass die Sonde (10) eine Wirbelstromsonde ist, und dass das Gerät weiterhin Einrichtungen ($M_3$, 102, 104, $M_4$, 102', 104') aufweist, um jede der Spulen unabhängig voneinander in einer Richtung zu versetzen, die senkrecht zu den Oberflächen verläuft, in Abhängigkeit eines zugehörigen Signals, das von der Behandlungseinrichtung geliefert wird.

8. Gerät zum lateralen Positionieren eines Organs (16) in bezug auf eine Unterbrechung (18) zwischen zwei in der Höhe gegeneinander verlagerten metallischen Flächen (12a, 14a) mit wenigstens einer Sonde (10), die zwei Spulen ($B_1$, $B_2$) aufweist, die symmetrisch in bezug auf eine Achse (a) angeordnet sind, die in einer Ebene liegt, die senkrecht zu den Flächen und durch die Unterbrechung verläuft, und wenigstens einen Abstandsmessfühler ($D_1$, $D_2$) der jeder der Spulen der Sonde zugeordnet ist, und mit Einrichtungen (94, 94') zum Behandeln der Quellensignale der Abstandsmessfühler, die jeder der Spulen zugeordnet sind und zum Abgeben von Signalen ($V_1$, $V_2$), die für die Distanz repräsentativ sind, die jede Spule von der gegenüberstehenden Oberfläche trennt, dadurch gekennzeichnet, dass die Sonde (10) eine Wirbelstromsonde ist, und dass das Gerät weiterhin Einrichtungen ($M_3$, 102, 104, $M_4$, 102', 104') enthält, um jede der Spulen unabhängig von der anderen in einer Richtung zu versetzen, die senkrecht zu den Oberflächen verläuft, in Abhängigkeit eines von den Behandlungseinrichtungen gelieferten Signals.

9. Gerät nach Anspruch 8, dadurch gekennzeichnet, dass die Abstandsmessfühler ($D_1$, $D_2$) Wirbelstromfühler sind, die eine einzige Spule aufweisen.

0 061 401

FIG. 1

FIG. 2

FIG. 3

FIG. 4

FIG. 5

FIG. 6

FIG. 7

FIG. 9

FIG. 8

FIG. 10